## Europäisches Patentamt

## European Patent Office

## Office européen des brevets

(19)

(11) Veröffentlichungsnummer: **0 150 742**
**B1**

(12)

# EUROPÄISCHE PATENTSCHRIFT

(45) Veröffentlichungstag der Patentschrift:
**06.04.88**

(21) Anmeldenummer: **85100264.2**

(22) Anmeldetag: **12.01.85**

(51) Int. Cl.⁴: **F 16 D 3/84**, F 16 P 1/02

(54) Schutzeinrichtung in Form eines Schutzschildes zum Abdecken einer Zapfwelle.

(30) Priorität: **21.01.84 DE 3402065**

(43) Veröffentlichungstag der Anmeldung:
**07.08.85 Patentblatt 85/32**

(45) Bekanntmachung des Hinweises auf die Patenterteilung:
**06.04.88 Patentblatt 88/14**

(84) Benannte Vertragsstaaten:
**AT DE FR GB IT SE**

(56) Entgegenhaltungen:
**US-E-30 152**

(73) Patentinhaber: **DEERE & COMPANY, 1 John Deere Road, Moline Illinois 61265 (US)**

(72) Erfinder: **Teich, Michael, Ing. grad., Rheinparkstrasse 2, D-6800 Mannheim 1 (DE)**

(74) Vertreter: **Feldmann, Bernhard, DEERE & COMPANY European Office, Patent Department Steubenstrasse 36- 42 Postfach 503, D-6800 Mannheim 1 (DE)**

LIBER, STOCKHOLM 1988

EP 0 150 742 B1

**Beschreibung**

Die Erfindung betrifft eine Schutzeinrichtung im Form eines Schutzschildes zum Abdecken einer Zapfwelle, insbesondere eines Ackerschleppers, die aus einer Schutzstellung, in der sie den sich drehenden Teil von mindestens einer Seite abdeckt, in eine Montagestellung, in der sie den Zugriff zu dem sich drehenden Teil ermöglicht, verstellbar, mit den einzelnen Stellungen zugeordneten Halterungen in Eingriff bringbar ist und zum Verstellen zwischen den beiden Stellungen wenigstens ein in einer Führung geführtes Lager aufweist, wobei die Führung oder das Lager an der Schutzeinrichtung und das Lager oder die Führung ortsfest angeordnet sind.

Aus Sicherheitsgründen wird beispielsweise in der Bundesrepublik Deutschland, aber auch in anderen Ländern, von staatlichen Institutionen, wie etwa der Berufsgenossenschaft, verlangt, daß angetriebene sich drehende Teile abgedeckt werden müssen, um Unfälle zu vermeiden, da sich an diesen sehr leicht Kleidungsstücke von Bedienungspersonen verfangen können. Gleichzeitig ist auch zu verhindern, daß diese Teile während ihres Einsatzes angefaßt werden können. Hierzu sind Sicherheitsvorschriften und Normen, wie etwa die DIN-Norm 31001 und die ISO-Norm 500, erlassen worden.

In der Landtechnik wie aber auch in anderen Bereichen der Technik dienen die sich drehenden Teile meist zum Abnehmen von Antriebsmomenten, weshalb sie hierzu mit zu weiteren Maschinen führenden Anschlußstücken verbunden werden.

So ist es bei Ackerschleppern üblich, diese mit einer sogenannten Zapfwelle auszurüsten, die von einem Verbrennungsmotor angetrieben wird und zumeist heckseitig aus einem Getriebegehäuse des Ackerschleppers austritt. Sie ist an ihrem aus dem Getriebegehäuse austretenden Ende mit einem Vielzahnprofil versehen, das der formschlüssigen Aufnahme einer Gelenkwellenkupplung einer zu einem angebauten oder angehängten Gerät führenden Gelenkwelle dient und in dem sich leicht Kleidungsstücke o. ä. verfangen können. Da die meisten Arbeitsgeräte am Heck des Ackerschleppers angebracht werden, befinden sich im Bereich der Zapfwelle gewöhnlich auch noch andere Aggregate wie eine Anhängerkupplung, eine Dreipunktgerätekupplung mit einem oberen und zwei unteren Lenkern und Anschläge zum Begrenzen der Seitenbeweglichkeit der unteren Lenker.

Es ist somit zusätzlich zum Erfüllen der sicherheitstechnischen Vorschriften darauf zu achten, daß der Zugang zu den vorgenannten Aggregaten und deren Funktion gewahrt bleibt und nicht von der Schutzeinrichtung beeinträchtigt wird. Weiterhin ist aber noch zu beachten, daß die Schutzeinrichtung eine Montage und eine Demontage der Anschlußstücke, also der Gelenkwellenkupplung, zuläßt, so daß der Antrieb zu dem angehängten oder angebauten Gerät unterbrochen bzw. hergestellt werden kann.

So kann ein Schutzschild der Schutzeinrichtung (GB-A-1 490 480), von der die Erfindung ausgeht, bereits in eine Schutzstellung, eine Montagestellung und in eine zwischen beiden Stellungen liegende Mittenstellung verstellt werden, wobei die Mittenstellung die Verwendung einer Gelenkwelle mit einem übermäßig großen Gelenkwellenkupplungsschutz ermöglicht.

Sie weist das Schutzschild mit zwei Seitenwänden und einen diese verbindenden Deckel und ortsfeste Lager auf, die mit in den Seitenwänden vorgesehenen Führungen in Form von Schlitzen derart zusammenwirken, daß das Schutzschild um die Lager herum in die verschiedenen Stellungen geschwenkt werden kann. Befindet sich das Schutzschild in einer seiner Stellungen, dann kann es mittels in den Seitenwänden vorgesehenen Rasten in Eingriff mit ebenfalls ortsfesten Arretierstiften gebracht und somit festgehalten werden.

Diese Schutzeinrichtung erfüllt bereits alle Forderungen der Berufsgenossenschaft und hat sich in der Praxis gut bewährt.

Im Zuge stets umfangreicher werdender Ausrüstungen von Ackerschleppern mit den zuvor genannten Aggregaten wird es jedoch erforderlich, Schutzeinrichtungen zu verwenden, die beispielsweise auch die Verwendung einer höhenverstellbaren Anhängerkupplung zum Anpassen der jeweiligen Deichselhöhen an den Ackerschlepper zulassen. So könnte die Verwendung bestimmter höhenverstellbarer Anhängerkupplungen zunächst eine Demontage der bekannten Schutzeinrichtung für die Dauer, in der sich die Anhängerkupplung in ihrer tiefsten in den Bereich der Schutzeinrichtung eindringenden Stellung befindet, voraussetzen, wodurch sie allerdings keine schützende Wirkung mehr entfalten könnte.

Die der Erfindung zugrunde liegende Aufgabe wird darin gesehen, eine derartige Schutzeinrichtung so auszubilden, daß das Schutzschild untere Schutzstellung einnehmen kann.

Diese Aufgabe ist erfindungsgemäß dadurch gelöst worden, daß die Führung derart verlängert ist, daß das Schutzschild in eine weitere Schutzstellung verstellbar ist, und daß eine Sperre, gegen die das Lager in einer Schutzstellung zur Anlage bringbar ist, vorgesehen und derart ausgebildet ist, daß das Lager wahlweise in der gesamten Führung bewegt werden kann.

Auf diese Weise kann das Schutzschild einmal eine Schutzstellung einnehmen, in der die sie umgebenden Aggregate innerhalb ihres für normale Arbeiten ausreichenden Bewegungsbereiches verstellt werden können und in der ein ungehinderter Betrieb der Zapfwelle mit der Gelenkwelle möglich ist. Es kann zusätzlich in die weitere Schutzstellung verfahren werden, wenn eine höhenverstellbare Anhängerkupplung oder ein besonders tief abgesenkter oberer Lenker der Dreipunktgerätekupplung dies erfordern, wobei hingenommen wird, daß in der weiteren Schutzstellung ein Betrieb der Zapfwelle mit der Gelenkwelle nur bedingt möglich ist, aber dafür gesorgt ist, daß eine Bedienungsperson nur sehr schwer an eine ungewollt in Drehung versetzte Zapfwelle gelangt. Indem die Sperre an dem Lager zur Anlage bringbar ist, stützt sich das Schutzschild auf dem Lager ab und kann durch auf sie herabfallende Erdschollen oder ähnliches nicht in die weitere Schutzstellung gebracht, aber als Auftritt zur Hilfe beim Aufsteigen auf den Ackerschlepper benutzt werden. Durch die verlängerte Führung erfährt das Schutzschild wahlweise, d. h. wenn die Sperre entfernt worden ist, einen größeren Bewegungsbereich und kann so zum Verstellen nach hinten außer Eingriff mit den Halterungen gezogen, um das Lager geschwenkt, abgesenkt und in Eingriff mit der Halterung für die weitere Schutzstellung gebracht werden, ohne daß das Schutzschild von dem Lager abgenommen werden müßte. Selbstverständlich sind die Bewegungen zwischen den jeweils zusammengehörenden Lagern und Führungen Relativbewegungen, weshalb es belanglos ist, ob das Lager oder die Führung feststehen und die Führung oder das Lager bewegt werden.

Der Erfindung entsprechend wird auf besonders einfache Weise die Verstellung des Schutzschildes dadurch ermöglicht, daß die Führung als Schlitz mit mindestens zwei in etwa rechtwinklig zueinander verlaufenden Abschnitten ausgebildet ist, wobei der erste Abschnitt waagerecht oder in einem geringen Winkel zu der Waagerechten in der einen Schutzstellung und der zweite Abschnitt als hochstehender Schenkel in der weiteren Schutzstellung angeordnet ist.

Das Schutzschild kann demnach in zwei Richtungen um das Lager verfahren werden, wobei davon ausgegangen wird, daß die Waagerechte die Aufstandsebene des relativ ortsfesten Teiles, insbesondere des Ackerschleppers, ist. Der rechtwinklig zu dem ersten Abschnitt verlaufende zweite Abschnitt würde bei einem Ackerschlepper parallel zu der Heckseite des Getriebegehäuses verlaufen, und das Schutzschild könnte an diesem entlang nach unten in die weitere Schutzstellung gebracht werden.

Um zu vermeiden, daß das Lager ungewollt aus der dem ersten Abschnitt zugeordneten Schutzstellung in die dem zweiten Abschnitt zugeordnete weitere Schutzstellung gelangt, ist des weiteren erfindungsgemäß vorgesehen, daß das Lager in dem Übergang von dem einen Abschnitt zu dem anderen Abschnitt wahlweise gegen die Sperre zur Anlage bringbar ist, wobei die Sperre in den Bewegungsbereich des Lagers schwenkbar und an dem Führung aufweisenden Schutzschild angelenkt ist. Die Bewegung des Schutzschildes wird demgemäß einfach dadurch gesteuert, daß die Sperre von der Bedienungsperson in oder aus dem Bewegungsbereich des Lagers geschwenkt wird.

In vorteilhafter Ausgestaltung ist nach einem zusätzlichen erfindungsgemäßen Vorschlag vorgesehen, daß die Sperre eine schwenkbare Klinke ist und daß die Klinke eine der Außenkontur des Lagers angepaßte Aussparung aufweist. Die Klinke kann manuell von dem Lager weggeschwenkt werden, wenn das Schutschild in die weitere Schutzstellung gebracht werden soll, oder an dem Lager zur Anlage gebracht werden, wenn das Schutzschild die Schutzstellung einnehmen soll, wobei die Klinke auf das Lager einfach abgelassen werden kann und dort aufgrund ihrer Aussparung einen sicheren Halt erfährt.

Dadurch, daß erfindungsgemäß sich an den zweiten Abschnitt ein dritter Abschnitt anschließt, der eine seitliche Aussparung aufweist, in der das Lager zur Anlage gebracht werden kann, ist es möglich, das Schutzschild in einer weiteren Stellung, die keine Schutzstellung sein muß, sondern in der die Montage oder Demontage einer Gelenkwellenkupplung auf oder von der Zapfwelle des Ackerschleppers möglich ist, zu halten. Die formschlüssige Verbindung des Lagers mit der Aussparung sorgt dafür, daß das Schutzschild nicht ungewollt in eine der Schutzstellungen zurückfällt.

Eine Schutzeinrichtung, bei der die Halterungen aus jeweils einem ortsfesten Arretierstift und mindestens zwei in dem schwenkbaren Schutzschild vorgesehenen Einschnitten bestehen, die Führung und das in ihr aufgenommene Lager mit seitlichem Abstand zu dem Schwerpunkt des sie aufnehmenden Schutzschildes angeordnet und das Lager in der Führung frei drehbar ist, ist gemäß der Erfindung vorzugsweise derart ausgebildet, daß die verlängerte Führung derart angeordnet ist, daß der der weiteren Schutzstellung zugeordnete Einschnitt auf einem Kreisbogen um das Lager gelegen ist, wenn das Schutzschild die weitere Schutzstellung einnimmt, und länger ist als der der Schutzstellung zugehörige Einschnitt.

Eine derartige Ausführung gewährleistet, daß selbst bei heftigsten auf die Schutzeinrichtung einwirkenden Erschütterungen, die ein Verschwenken des Schutzschildes herbeiführen, dieses aufgrund der Schwerkraft wieder in ihre Schutzstellung zurückschwenkt. Durch die gegenüber dem Einschnitt für die Schutzstellung größere Länge des Einschnittes schwenkt das Schutzschild so weit nach unten, bis der Arretierstift an dem Ende des Einschnittes zur Anlage kommt. Durch das tiefe Absinken des Schutzschildes wird mehr Freiraum für die höhenverstellbare Anhängerkupplung und den oberen Lenker gewonnen.

Den Sicherheitsvorschriften Rechnung tragend ist nach der Erfindung eine Schutzeinrichtung mit sich an den Mündungen der Einschnitte

ergebenden Kanten derart ausgebildet, daß eine sich an der Mündung des der Schutzstellung zugehörigen Einschnittes ergebende, dem Lager zugelegene Kante weiter von dem Lagermittelpunkt entfernt ist als mindestens eine von ebenfalls dem Lager zugelegenen Kanten des Arretierstiftes, wenn das Schutzschild die Schutzstellung einnimmt. Diese Merkmale bewirken, daß beim Einwirken von Erschütterungen auf das Schutzschild dieses nicht um das Lager schwenken kann, sondern mit der Kante des der Schutzstellung zugehörigen Einschnittes an dem Arretierstift zur Anlage gerät und seine Schutzstellung auch unter diesen widrigen Umständen beibehält.

Um die Schutzeinrichtung in ihrer Montagestellung zu halten, ist erfindungsgemäß ein Halter vorgesehen, der mit mindestens einer in einem Oberteil des Schutzschildes angeordneten Aussparung in Formschluß bringbar ist, wenn das Schutzschild die Montagestellung einnimmt, wobei mit mehreren in dem Oberteil vorgesehenen Aussparungen das Schutzschild während der Montage oder Demontage einer Gelenkwellenkupplung in verschiedenen den jeweiligen Platzerfordernissen Rechnung tragenden Stellungen festgelegt werden kann.

Ein unbeabsichtigtes Freigeben des Überganges von dem ersten zu dem zweiten Abschnitt durch ein von Erschütterungen verursachtes Schwenken der Klinke wird dadurch erschwert, daß seitlich der Aussparung der Klinke eine kurze und eine lange Nase angeordnet sind, wobei die lange Nase beim Aufliegen der Klinke auf dem Lager oberhalb von diesem zu liegen kommt, da selbst dann, wenn sich die Führung mit dem Schutzschild über die gesamte Länge des Abschnittes verschiebt und sich die Klinke von dem Lager wegbewegt, die Klinke mit der langen Nase nicht an dem Lager vorbei nach unten, sondern nur entgegen der Schwerkraft nach oben schwenken kann.

Solange sich das Schutzschild in der Schutzstellung befindet, umgreift die Klinke mit der kurzen und der langen Nase das Lager derart, daß sie weder nach oben noch nach unten schwenken kann.

Ein nachfolgend näher beschriebenes Ausführungsbeispiel der Erfindung ist in der Zeichnung dargestellt. Es zeigt:

Fig. 1 eine Ansicht einer Heckseite eines Ackerschleppers mit einer erfindungsgemäßen Schutzeinrichtung,

Fig. 2 ein Schutzschild der Schutzeinrichtung im angebauten Zustand in einer Normalposition in Seitenansicht,

Fig. 3 das Schutzschild in einer zweiten Position in Seitenansicht,

Fig. 4 das Schutzschild in einer dritten Position in Seitenansicht,

Fig. 5 das Schutzschild in einer vierten Position in Seitenansicht.

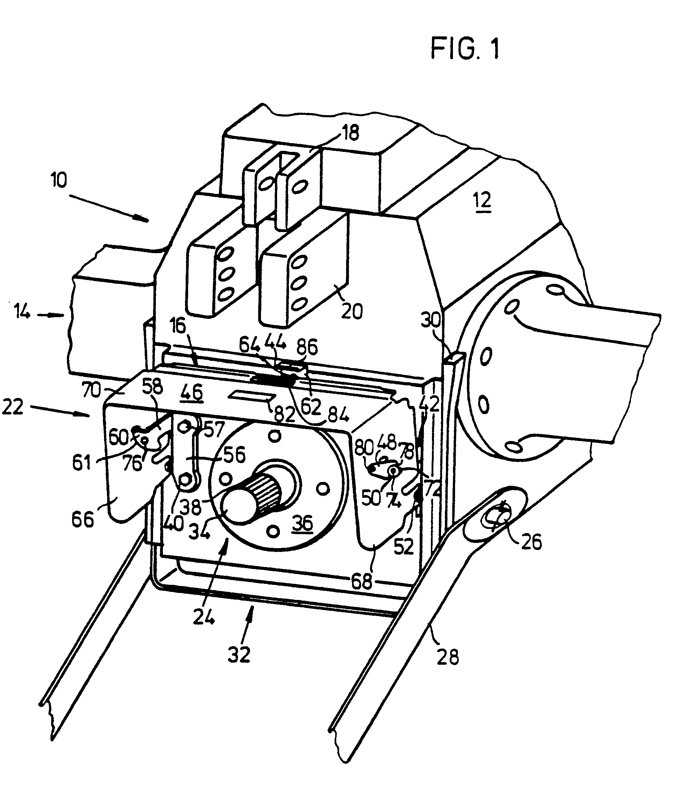

Ein in Fig. 1 teilweise dargestelltes Heck 10 eines Ackerschleppers wird im wesentlichen von einem Getriebegehäuse 12 gebildet, an das auf jeder Seite ein Achstrichter 14 angeflanscht ist und an dessen Rückseite 16 ein Halter 18 zum Aufnehmen eines nicht gezeigten oberen Lenkers, eine Aufnahmevorrichtung 20 eines in der Zeichnung weggelassenen höhenverstellbaren Zugmauls und eine Schutzeinrichtung 22 für einen sich drehenden Teil in Form einer Zapfwelle 24 angebaut sind. Ferner ragt rückwärtig und unterhalb der Achstrichter 14 ein Biegestab 26 aus dem Getriebegehäuse 12 heraus, der beidseitig des Getriebegehäuses 12 jeweils einen unteren Lenker 28 schwenkbar aufnimmt. Zwischen dem unteren Lenker 28 und dem Getriebegehäuse 12 ist ein Anschlag 30 zum Begrenzen des Seitenspiels der unteren Lenker 28 vorgesehen, und unterhalb am rückwärtigen Ende des Getriebegehäuses 12 befindet sich eine Halterung 32 für ein der Einfachheit wegen in der Zeichnung weggelassenes Zugpendel.

Die Zapfwelle 24 wird über nicht ersichtliche Antriebsmittel, die in dem Getriebegehäuse 12 angeordnet sind, und abhängig von der Stellung einer Steuervorrichtung von einem Antriebsmotor aus, die beide nicht gezeigt sind, angetrieben, d. h. in Drehung versetzt. Von der Zapfwelle 24 ragt lediglich ein Stummel 34 aus der Rückseite 16 des Getriebegehäuses 12 heraus, der in einem Lagerteil 36 drehbar aufgenommen ist und an seinem Umfang Verzahnungen 38 aufweist, die mit einer nicht dargestellten Gelenkwellenkupplung formschlüssig in Eingriff gebracht werden können. Eine mit letzterer verbundene Gelenkwelle führt gewöhnlich zu einem antreibbaren Arbeitsgerät, etwa in Form eines Düngerstreuers, einer Bodenfräse, einer Erntemaschine oder ähnlichem, oder zu einem Anhänger, der an das Zugmaul angehängt ist und dessen Räder oder dessen Aufbau über die Gelenkwelle in Bewegung versetzt werden.

Um zu vermeiden, daß durch die sich im Betrieb drehende Gelenkwelle Unfälle verursacht werden können, sind sämtliche sich in Drehung befindliche Teile abzudecken, was bei der Gelenkwelle durch deren Einsetzen in ein lose mit ihr verbundenes Schutzrohr geschieht, während für den aus dem Getriebegehäuse 12 herausragenden Stummel 34 die erfindungsgemäße Schutzeinrichtung 22 vorgesehen ist.

Diese Schutzeinrichtung 22 soll derart ausgebildet sein, daß sie nicht nur den drehenden Stummel 34 der Zapfwelle 24 und die Gelenkwellenkupplung unfallsicher abdeckt, sondern auch die Bedienung und den Anbau weiterer Komponenten des Ackerschleppers wie das Zugmaul und das Zugpendel und die unteren und den oberen Lenker nicht behindert. Ferner soll sie im außerbetrieblichen Zustand einen freien Zugang zu der Gelenkwellenkupplung gewähren, um diese von dem Stummel 34 abziehen zu können. Eine weitere Forderung besagt, daß die Schutzeinrichtung 22 ohne Wartung stets betriebsbereit sein muß und daß zu ihrer Funktion keine Teile verwendet werden dürfen, die unter den Betriebsbedingungen eines Ackerschleppers infolge seiner Berührung mit Wasser, Sand, Schlamm u. v. a. eine Funktionslosigkeit der Schutzeinrichtung 22 hervorrufen könnten.

Hierzu weist die Schutzeinrichtung 22 im wesentlichen einen linken, einen rechten und einen oberen Halter 40, 42, 44, ein Schutzschild 46 mit sich in Fahrtrichtung erstreckenden Außenseiten, an denen sich jeweils eine Sperre oder Klinke 48, ein als Schwenklager 50 wirkendes Lager und ein Arretierstift 52 befinden, auf, wobei sich die Angaben links und rechts auf die Vorwärtsfahrtrichtung des Ackerschleppers beziehen. Je nach den Abmessungen der Schutzeinrichtung 22, insbesondere im Hinblick auf die verwendeten Materialien und die ausgewählten Materialstärken, kann es auch bereits ausreichend sein, wenn die Klinke 48, das Schwenklager 50 und der Arretierstift 52 nur auf der einen Außenseite des Schutzschildes 46 vorgesehen sind.

Der linke und der rechte Halter 40 und 42 sind spiegelbildlich ausgebildet und bestehen aus je einem Winkeleisen, dessen einer Schenkel 56 über Schrauben an die Rückseite 16 des Getriebegehäuses 12 angeflanscht ist, während der andere Schenkel 58 sich rückwärtig von dem Getriebegehäuse 12 fort erstreckt und an den eine eine in den Figuren nicht erkennbare Bohrung aufweisende Lasche 60, die sich ebenfalls rückwärtig erstreckt, angeschweißt ist. An dem unteren Ende des anderen Schenkels 58 ist schließlich der Arretierstift 52 angebracht, und zwar so, daß er von diesem sich quer zur Fahrtrichtung fort erstreckt. Der obere Halter 44 ist zweifach entgegengesetzt um 90° gekröpft und weist somit im wesentlichen ein Z-Profil auf, wobei ein nach unten gerichteter Schenkel 62 eine in Fig. 1 verdeckte Bohrung besitzt, durch die sich eine Schraube 64 zum Eindrehen in eine nicht erkennbare Gewindebohrung in der Rückseite 16 des Getriebegehäuses 12 erstreckt. Der obere Halter 44 ist mittig zwischen dem linken und dem rechten Halter 40, 42 und etwas oberhalb von diesen angeordnet.

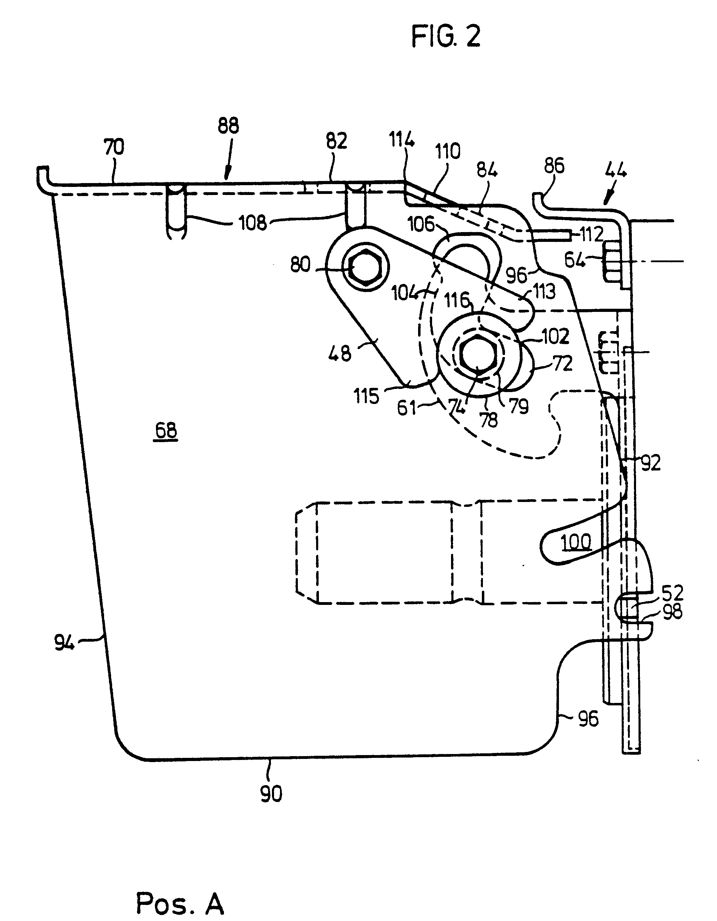

Das Schutzschild 46 weist im wesentlichen eine U-Form mit einem linken und einem rechten Seitenteil 66, 68 sowie einem Oberteil 70 auf und ist nach unten, nach vorn und nach hinten geöffnet. Jeder Seitenteil 66, 68 ist mit einer als Schlitz 72 ausgebildeten Führung versehen, durch die sich eine Schraube 74 des Schwenklagers 50 bis durch die Bohrung in der Lasche 60 hindurch erstreckt und dort über eine Mutter 76 gehalten wird, wobei sich unter dem Kopf der Schraube 74 eine Scheibe 78 mit einem Durchmesser, der größer ist als die Breite des Schlitzes 72, befindet und sich zwischen der Scheibe 78 und der Lasche 60 eine Distanzhülse 79 erstreckt, deren Außendurchmesser geringfügig kleiner ist als die Breite des Schlitzes 72. Das rückwärtige Ende 61 der Lasche 60, in dem sich auch die Bohrung befindet, ist nierenförmig ausgebildet, und zwar derart, daß in jeder Stellung des Schutzschildes 46 der Schlitz 72 verdeckt ist und somit ein die Schutzeinrichtung 22 Bedienender mit seinen Fingern nicht in den von dem Schutzschild 46 umschlossenen Gefahrenbereich durch den Schlitz 72 gelangen kann. Das Schwenklager 50 kann auch dergestalt ausgebildet sein, daß die Distanzhülse 79 und die Scheibe 78 als ein einziger Teil mit T-förmigem Querschnitt und mit einer zentrischen Gewindebohrung ausgebildet sind, wobei der Fuß des T die Funktion der Distanzhülse 79 und der Kopf des T die Funktion der Scheibe 78 übernimmt und dieser Teil über eine gewöhnliche Schraube, die sich durch die Bohrung in der Lasche 60 nach außen erstreckt, an der Lasche 60 befestigt wird. Die Verwendung der Distanzhülse 79 ermöglicht es, die Schraube 74 so fest anzuziehen, daß sie nur unter Verwendung geeigneten Werkzeuges, jedoch nicht mit der bloßen Hand, wieder entfernt und somit der Schutz demontiert werden kann. Dies ist ein präventives Sicherheitsmerkmal, das einer Demontage des Schutzschildes 46 seitens des Bedienenden aus unwichtigen Beweggründen heraus vorbeugt. Rückwärtig des Schlitzes 72 ist die Klinke 48 angebracht, die von einer sich durch eine nicht ersichtliche Bohrung in dem Schutzschild 46 erstreckenden Schraube 80 gehalten wird, wobei sich zwischen dem Kopf der Schraube 80 und dem Schutzschild 46 wiederum eine nicht erkennbare Distanzhülse befindet. In den Oberteil 70 sind eine erste und eine zweite Aussparung 82, 84 mittig zwischen den beiden Seitenteilen 66, 68 eingebracht, die geeignet sind, einen oberen Schenkel 86 des oberen Halters 44 in sich aufzunehmen. Die Tiefe der ersten und der zweiten Aussparung 82 und 84 entspricht dabei mindestens der Höhe des oberen Schenkels 86 des oberen Halters 44. Zur weiteren Beschreibung insbesondere der Form der Seitenteile 66, 68 des Schutzschildes 46 wird im folgenden auf Fig. 2 verwiesen.

Das Schutzschild 46 ist symmetrisch ausgestaltet, weshalb nachfolgend nur der rechte Seitenteil 68 beschrieben wird. Diese Beschreibung gilt für den linken Seitenteil 66 analog.

Der rechte Seitenteil 68 weist eine obere, eine untere, eine vordere und eine rückwärtige Kante 88, 90, 92 und 94 auf, die eine ungefähr quadratische Fläche umschließen. Die vordere Kante 92 weist außer zwei Ausschnitten 96, die lediglich ein Anstoßen der Seitenteile 66, 68 an benachbarte Teile verhindern sollen, einen kurzen und einen langen Einschnitt 98 und 100 auf, die wahlweise in sich den Arretierstift 52 aufnehmen können und somit eine Halterung bilden. Beide Einschnitte 98, 100 sind in der unteren Hälfte des Seitenteils 68 angeordnet, wobei der lange Einschnitt 100 über dem kurzen 98 zu liegen kommt und die Form eines nach oben gewölbten Bogens aufweist, wie dies später noch erläutert wird. In der oberen Hälfte des Seitenteils 68 und etwas nach hinten gegenüber den Einschnitten 98, 100 versetzt ist der Schlitz 72 in den Seitenteil 68, der aus ca. 2 mm starkem Stahlblech besteht, eingefräst oder eingestanzt. Der Schlitz 72 selbst besteht aus drei Abschnitten, nämlich einem jeweils mit Bezug auf die Aufstandebene des Ackerschleppers fast waagrechten, jedoch leicht nach hinten ansteigenden Abschnitt 102, einem nahezu senkrechten, jedoch oben leicht nach vorne kippenden Abschnitt 104 und einem waagrechten, in seiner Länge die Breite des Schlitzes 72 geringfügig übertreffenden Abschnitt 106. Die Breite des Schlitzes 72 in den Abschnitten 102, 104 und 106 ist identisch. Der Abschnitt 102 verläuft zu der Rückseite 16 in einem Winkel von ca. 65°, der Abschnitt 104 zu dem Abschnitt 102 in einem Winkel von ca. 90° und der Abschnitt 106 zu der Rückseite 16 in einem Winkel von ca. 90°. An der oberen Kante 88 des Seitenteils 68 schließt der Oberteil 70 an, wobei zur Erhöhung der Steifheit des Schutzschildes 46 an der oberen Kante 88 Sicken 108 vorgesehen sind. Der Oberteil 70 ist auf einer Länge von ungefähr 2/3 der Länge der oberen Kante 88 mit dem Seitenteil 68 verbunden und in sich eben. Auf der restlichen Länge, die sich von der vorderen Kante 90 bemißt, ist er nach vorne und nach unten leicht geneigt abgebogen, und in einer hierdurch entstandenen Schräge 110 ist die zweite Aussparung 84 gelegen. Die Schräge 110 läuft abschließend in ein gerades Teilstück 112 aus, das sich bis unterhalb des oberen Halters 44 erstreckt, wenn der Oberteil 70 mit seinem geraden Teilstück 112 senkrecht zu der Rückseite 16 des Getriebegehäuses 12 verläuft, wobei die Länge des geraden Teilstückes 112 so bemessen ist, daß es die nachfolgend beschriebene Schwenkbewegung des Schutzschildes 46 um das Schwenklager 50 nicht stört. Die erste Aussparung 82 befindet sich in dem geraden Teilstück des Oberteils 70, und zwar nahe und rückwärtig einer sich zwischen dem Oberteil 70 und der Schräge 110 ergebenden Kante 114.

Die Klinke 48 weist eine Dreiecksgestalt auf und ist an ihrer der Bohrung gegenüberliegenden Seite mit einer halbrunden Aussparung 116 versehen, die in der zuvor beschriebenen Stellung die Scheibe 78 ungefähr zur Hälfte umgreift. Die Klinke selbst ist um 360° um die Schraube 80 schwenkbar. Die die Klinke 48 haltende Schraube 80 ist am oberen Ende und rückwärtig des Schlitzes 72 plaziert, so daß sich die Klinke 48 über ihre halbrunde Aussparung 116 auf der Scheibe 78 abstützt, solange der kürzeste Abstand des Umfangs der Scheibe 78 zu der Schraube 80 geringer ist als der Abstand der Schraube 80 zu der am weitesten entfernten Stelle der Klinke 48 auf einer der beiden Seiten der halbrunden Aussparung 116. Aufgrund der versetzten Anordnung der Klinke 48 gegenüber dem Schlitz 72 und somit dem Schwenklager 50 und der Anordnung der die Klinke 48 haltenden Schraube 80 in ihr ergibt sich, daß der Abstand von der den Schwenkpunkt bildenden Schraube 80 zu den der halbrunden Aussparung 116 nahe gelegenen Ecken des Dreiecks unterschiedlich groß ist. So ist eine die halbrunde Aussparung 116 einerseits begrenzende Nase 113 länger als eine dieser gegenüberliegende Nase 115, weshalb selbst beim Nachhintenziehen des Schutzschildes 46 die Klinke 48 mit ihrer kürzeren Nase 115 bereits an dem Schwenklager 50 vorbeigeschwenkt werden kann, während die Klinke 48 über ihre längere Nase 113 noch auf der Scheibe 78 aufliegt und somit nicht ungewollt außer Eingriff mit dem Schwenklager 50 kommen kann. Sobald jedoch das Schutzschild 46 so weit verschoben wird, daß die zuvor genannten Abstände zumindest gleich groß werden, kann die Klinke 48 in einer Richtung, und zwar nach oben, an der Scheibe 78 vorbeigeschwenkt werden. Hierzu ist dann das Schutzschild 46 seitlich mit den Händen anzufassen und die Klinke 48 beispielsweise mit dem Daumen nach oben wegzuschwenken. Es ist zu erkennen, daß durch die Form der Klinke 48 diese grundsätzlich nicht ohne Zutun eines Bedienenden an der Scheibe 78 vorbeigeschwenkt werden kann und so beim Fahren auf holprigen Wegstrecken die Klinke 48 ihre Stellung beibehält oder in diese zurückfällt, in der sie ein Eintreten des Schwenklagers 50 in den Abschnitt 104 verhindert. Die Länge des Schlitzes 72 in seinem Abschnitt 102, wobei die Länge als die jeweils größte Dimension dieses Abschnittes 102 wie auch der anderen Abschnitte 104, 106, ungeachtet der Lage des Schlitzes 72, angesehen wird, ist derart bemessen, daß sie mindestens eine Bewegung des Schutzschildes 46 zuläßt derart, daß die Klinke 48 an der Scheibe 78 nach oben vorbeigeschwenkt werden kann, d. h. eine Bewegung um das Differenzmaß der zuvor genannten Abstände und zusätzlich den Durchmesser der Distanzhülse 79, damit das Schutzschild 46 mit der oberen Kontur des Schlitzes 72 in seinem Abschnitt 102 auf der Distanzhülse 79 aufliegen kann. Das Schutzschild 46 kann lediglich begrenzt durch die Konturen des Schlitzes 72 um das Schwenklager 50 geschwenkt und an diesem vorbeigeschoben werden. Die Länge des Abschnittes 106 ist um die Höhe des oberen Schenkels 86 des oberen Halters 44 größer als die Breite des Schlitzes 72 in den Abschnitten 102 und 104, so daß dann, wenn sich das Schutzschild 46 in einer später noch zu beschreibenden Stellung befindet, es mit seiner ersten Aussparung 82 über den oberen Schenkel 86 auf den oberen Halter 44 aufgesetzt und vor dem oberen Schenkel 86 auf den oberen Halter abgelassen werden kann, wodurch die Distanzhülse 79 des Schwenklagers 50 durch die Anlage an dem Schutzschild 46 dieses im Abschnitt 106 gegen ein Verschwenken hält.

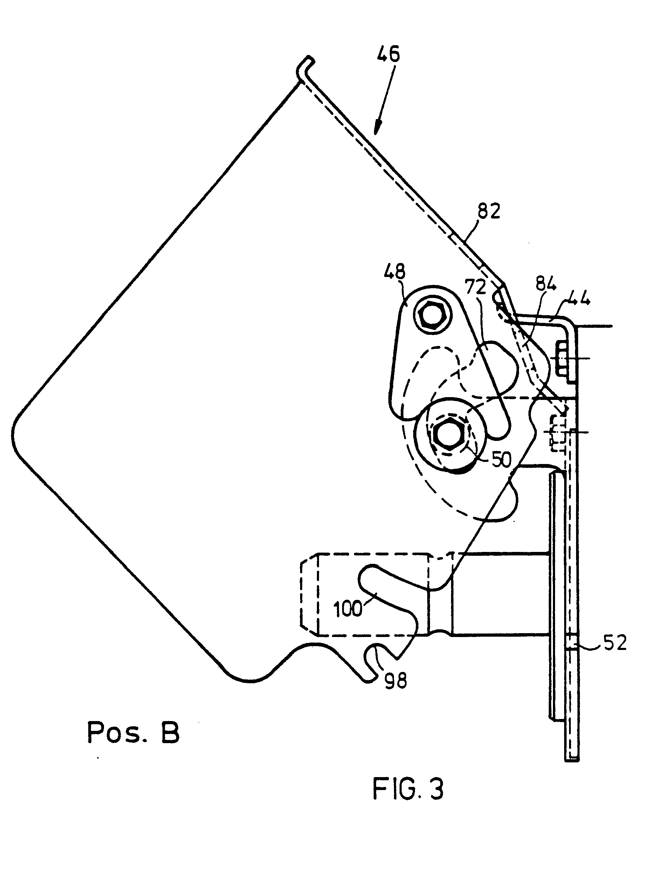

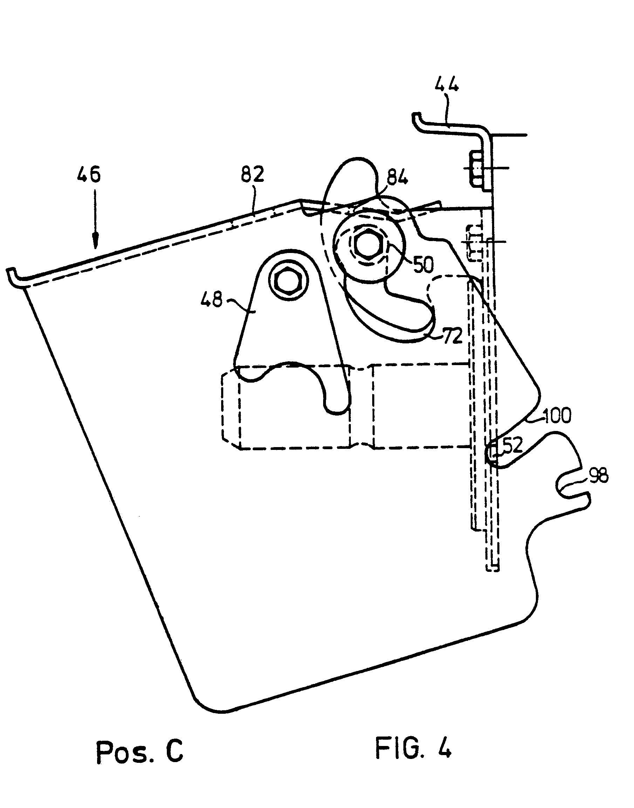

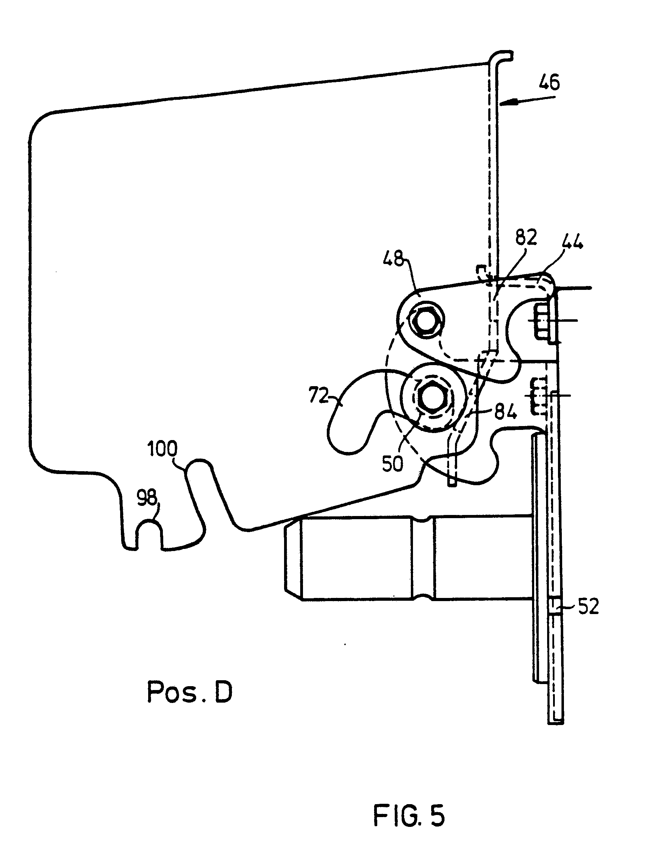

Entsprechend dem Vorbeschriebenen kann das Schutzschild 46 in vier verschiedene Positionen gebracht werden, indem es um das Schwenklager 50 verschoben und/oder geschwenkt wird. Diese Positionen werden im folgenden mit A, B, C und D bezeichnet, wobei A für eine Normalposition steht, in der der Oberteil 70 zu dem über ihm liegenden Teil der Rückseite 16 einen Winkel von ca. 90° einschließt und die in Fig. 2 wiedergegeben ist. Mit B wird eine Position bezeichnet, in der der Oberteil 70 mit dem über ihm liegenden Teil der Rückseite 16 einen Winkel von ca. 45° einschließt und in der bereits eine ausreichend gute Zugänglichkeit zu der Gelenkwellenkupplung gegeben ist (siehe hierzu Fig. 3). In Position B kann bei sich senkrecht zu der Rückseite 16 erstreckender Gelenkwelle im betriebslosen Zustand die Gelenkwellenkupplung bereits demontiert werden. Befindet sich das Schutzschild 46 in seiner in Fig. 4 dargestellten Position C, dann schließt der Oberteil 70 mit dem über ihm liegenden Teil der Rückseite 16 einen Winkel von ca. 105° ein. In dieser Position kann gegebenenfalls noch eine Gelenkwelle mit einer kleinen Gelenkwellenkupplung angeschlossen sein, und gleichzeitig kann ein Zugmaul an der Aufnahmevorrichtung 20 in der tiefstmöglichen Stellung angebracht werden. Die Position D, entsprechend Fig. 5, führt zu einem parallelen Verlaufen des Oberteils 70 zu der Rückseite 16, um einen optimalen Zugriff zu der Gelenkwellenkupplung zu erreichen und um Bewegungsfreiheit zum Anbau der Anschläge 30 zum Begrenzen des Seitenspiels der unteren Lenker 28 zu gewinnen. Befindet sich das Schutzschild in seinen Positionen A oder C, dann kann es auch als Trittstufe für den Fahrer genutzt werden.

In der Normalposition A liegt der Arretierstift 52 in dem kurzen Einschnitt 98 an, und das Schwenklager 50 befindet sich in dem Abschnitt 102 des Schlitzes 72. Die Klinke 48 liegt an der Scheibe 78 an, und der obere Halter 44 ist mit keiner der Aussparungen 82, 84 in Eingriff. Die Distanzhülse 79 liegt an der oberen Kontur des Schlitzes 72 in dem Abschnitt 102 an und verhindert gemeinsam mit dem Arretierstift 52, daß das Schutzschild 46 hinten nach unten aufgrund der Schwerkraft wegschwenkt. Eine Schwenkbewegung des Schutzschildes 46 im Uhrzeigerdrehsinn mit Blickrichtung auf Fig. 2 wird insbesondere dadurch verhindert, daß der kurze Einschnitt 98 den Arretierstift 52 nicht freigibt, solange das Schutzschild 46 nicht nach hinten gezogen worden ist. Eine reine Schwenkbewegung in der Stellung A im Uhrzeigerdrehsinn, wie sie sich beispielsweise beim Fahren auf einer holprigen Strecke von selbst ergeben könnte, ist also nicht möglich. Selbst bei einer Verschiebung des Schutzschildes 46 aufgrund von stärksten Erschütterungen so weit, daß der kurze Einschnitt 98 momentan außer Eingriff mit dem Arretierstift 52 gelangen sollte, würde das Schutzschild 46 aufgrund der Schwerkraft wieder nach unten fallen und entweder an der vorderen Kante 92 anliegen oder zurück in den kurzen Einschnitt 98 eintreten.

Um das Schutzschild 46 aus seiner Normalposition A in seine Position B zu bringen, wird es zunächst nach hinten gezogen, um den kurzen Einschnitt 98 außer Eingriff mit dem Stift 52 zu bringen, und dann um das Schwenklager 50 hinten nach oben, d. h. in Fig. 2 im Uhrzeigerdrehsinn, verschwenkt, und zwar so weit, daß die zweite Aussparung 84 mit dem oberen Halter 44 in Eingriff gebracht und dann auf diesen abgelassen werden kann. Während des Verschwenkens stützt sich das Schutzschild 46 über die Klinke 48 auf der Unterlegscheibe 78 ab, wodurch verhindert wird, daß es nach unten rutscht und das Schwenklager 50 in die Abschnitte 104, 106 gelangt. Die Distanzhülse 79 liegt während des ganzen Vorganges an den Konturen des Schlitzes 72 in dem Abschnitt 102 an, und die Klinke 48 gleitet mit der langen Nase 113 auf der Scheibe 78.

Soll das Schutzschild 46 ausgehend von der Position A oder B seine Position C oder D einnehmen, dann ist es so weit nach hinten zu ziehen, bis die Klinke 48 die Scheibe 78 so weit freigibt, daß sie um die Schraube 80 entgegen dem Uhrzeigerdrehsinn nach oben mit Bezug auf die Zeichnung von Hand fortgeschwenkt werden kann, wobei der kurze Einschnitt 98 gleichzeitig den Arretierstift 52 freigibt.

Sobald die Klinke 48 nicht mehr an der Scheibe 78 anliegt und der Arretierstift 52 sich nicht mehr in dem kurzen Einschnitt 98 befindet, kann das Schutzschild 46 aus seiner Position A oder B in seine Position C gebracht werden, indem es in Fig. 2 im Uhrzeigerdrehsinn um das Schwenklager 50 verschwenkt wird. Danach wird es abgesenkt und im Gegenuhrzeigerdrehsinn so geschwenkt, daß die vordere Kante 92 an dem Arretierstift 52 entlanggleiten kann, bis dieser in den langen Einschnitt 100 eintritt. Gleichzeitig mit diesem Verschwenken gleitet das Schutzschild 46 so weit nach unten, daß das Schwenklager 50 den Abschnitt 104 passiert und in dem Abschnitt 106 zu liegen kommt. In dieser Position liegt der lange Einschnitt 100 auf einem Kreisbogen um den Mittelpunkt des Schwenklagers 50, so daß das Schutzschild zwanglos im Gegenuhrzeigerdrehsinn im Bereich des langen Einschnittes 100 in Eingriff mit dem Arretierstift 52 geschwenkt und an diesen aufgrund der Schwerkraft zur Anlage gebracht werden kann. Die Klinke 48 übernimmt in dieser Stellung keine Funktion.

Letztlich wird das Schutzschild 46 aus seiner Position C in seine Position D geführt durch ein einfaches Verschwenken im Uhrzeigerdrehsinn mit Blick auf die Zeichnung um das Schwenklager 50 hinten nach oben, wobei der Arretierstift 52 außer Eingriff mit dem langen Einschnitt 100 gerät. Die Schwenkbewegung wird fortgesetzt, bis die erste Aussparung 82 den oberen Halter 44 umgreifen und das Schutzschild 46 auf diesen abgelassen werden kann. Wenn das Schutzschild 46 auf dem oberen Halter 44 aufgehängt ist, umgreift der Abschnitt 106 die Distanzhülse 79 wie zuvor beschrieben, so daß das Schutzschild 46 dann von dem Halter 44 und durch die Anlage des Schwenklagers 50 in dem Abschnitt 106 gegen Verschwenken gehalten wird. Auch in dieser Position D bleibt die Klinke 48 ohne Wirkung. Um das Schutzschild 46 von einer der Positionen B bis D wieder in die Position A zurückzubringen, sind die einzelnen Verfahrensschritte in umgekehrter Reihenfolge vorzunehmen.

Selbstverständlich kann das Schutzschild 46 von jeder der vorgenannten Positionen A bis D in irgendeine beliebige andere Position A bis D gebracht werden, ohne daß eine bestimmte Reihenfolge eingehalten werden müßte, wobei lediglich die Klinke 48 gegebenenfalls wegzuschwenken bzw. zurückzuschwenken ist.

In jeder der Positionen A bis C befindet sich das gerade Teilstück 112 so nahe an der Rückseite 16, daß weder größere Gegenstände zwischen dem Oberteil 70 und der Rückseite 16 auf den Stummel 34 fallen können, noch daß eine Person mit der Hand durch den sich ergebenden Spalt an den Stummel 34 gelangen kann.

Das zuvor beschriebene Ausführungsbeispiel der Schutzeinrichtung 22 kann auch derart abgeändert werden, daß die erste Aussparung 84 entfällt und das Schutzschild 46 mittels seines geraden Teilstückes 112 den oberen Halter 44 untergreift und es somit in seiner Position B hält.

**Patentansprüche**

1. Schutzeinrichtung (22)in Form eines Schutzschildes (46) zum Abdecken einer Zapfwelle (24), insbesondere eines Ackerschleppers, das aus einer Schutzstellung, in der de die Zapfwelle (24) von mindestens einer Seite abdeckt, in eine Montagestellung, in der es den Zugriff zu der Zapfwelle (24) ermöglicht, verstellbar, mit den einzelnen Stellungen zugeordneten Halterungen (52, 98, 100) in Eingriff bringbar ist und zum Verstellen zwischen den beiden Stellungen wenigstens ein in einer Führung (72) geführtes Lager (50) aufweist, wobei die Führng (72) oder das Lager (50) an dem Schutzschild (46) und das Lager (50) oder die Führung (72) ortsfest angeordnet sind, dadurch gekennzeichnet, daß die Führung (72) derart verlängert ist, daß das Schutzschild (46) in eine weitere Schutzstellung verstellbar ist, und daß eine Sperre (48), gegen die das Lager (50) in einer Schutzstellung zur Anlage bringbar ist, vorgesehen und derart ausgebildet ist, daß das Lager (50) wahlweise in der gesamten Führung (72) bewegt werden kann.

2. Schutzeinrichtung nach Anspruch 1, dadurch gekennzeichnet, daß die Führung (72) als Schlitz mit mindestens zwei in etwa rechtwinklig zueinander verlaufenden Abschnitten (102, 104) ausgebildet ist, wobei der erste Abschnitt (102) waagerecht oder in einem geringen Winkel zu der Waagerechten in der einen Schutzstellung und der zweite Abschnitt (104) als hochstehender Schenkel in der weiteren Schutzstellung angeordnet ist.

3. Schutzeinrichtung nach Anspruch 2, dadurch gekennzeichnet, daß das Lager (50) in dem Übergang von dem einen Abschnitt (102) zu dem anderen Abschnitt (104) wahlweise gegen die Sperre (48) zur Anlage bringbar ist.

4. Schutzeinrichtung nach einem oder mehreren der vorherigen Ansprüche, dadurch gekennzeichnet, daß die Sperre (48) in den Bewegungsbereich des Lagers (50) schwenkbar und an dem die Führung (72) aufweisenden Schutzschild (46) angelenkt ist.

5. Schutzeinrichtung nach einem oder mehreren der vorherigen Ansprüche, dadurch gekennzeichnet, daß die Sperre (48) eine schwenkbare Klinke ist.

6. Schutzeinrichtung nach einem oder mehreren der vorherigen Ansprüche, dadurch gekennzeichnet, daß die Klinke (48) eine der Außenkontur des Lagers (50) angepaßte Aussparung (116) aufweist.

7. Schutzeinrichtung nach einem oder mehreren der vorherigen Ansprüche, dadurch gekennzeichnet, daß sich an den zweiten Abschnitt (104) ein dritter Abschnitt (106) anschließt, der eine seitliche Aussparung aufweist, in der das Lager (50) zur Anlage gebracht werden kann.

8. Schutzeinrichtung nach einem oder mehreren der vorherigen Ansprüche, wobei die Halterungen (52, 98, 100) aus jeweils einem ortsfesten Arretierstift (52) und mindestens zwei in dem schwenkbaren Schutzschild (46) vorgesehenen Einschnitten (98, 100) bestehen, die Führung (72) und das in ihr aufgenommene Lager (50) mit seitlichem Abstand zu dem Schwerpunkt des sie aufnehmenden Schutzschildes (46) angeordnet und das Lager (50) in der Führung (72) frei drehbar ist, dadurch gekennzeichnet, daß die verlängerte Führung (72) derart angeordnet ist, daß der der weiteren Schutzstellung zugeordnete Einschnitt (100) auf einem Kreisbogen um das Lager (50) gelegen ist, wenn das Schutzschild (46) die weitere Schutzstellung einnimmt, und länger ist als der der Schutzstellung zugehörige Einschnitt (98).

9. Schutzeinrichtung nach Anspruch 8 mit sich an den Mündungen der Einschnitte (98, 100) ergebenden Kanten, dadurch gekennzeichnet, daß eine sich an der Mündung des der Schutzstellung zugehörigen Einschnittes (98) ergebende, dem Lager (50) zugelegene Kante weiter von dem Lagermittelpunkt entfernt ist als mindestens eine von ebenfalls dem Lager (50) zugelegenen Kanten des Arretierstiftes (52), wenn das Schutzschild (46) die Schutzstellung einnimmt.

10. Schutzeinrichtung nach einem oder mehreren der vorherigen Ansprüche, dadurch gekennzeichnet, daß ein Halter (44) vorgesehen ist, der mit mindestens einer in einem Oberteil (70) des Schutzschildes (46) angeordneten Aussparung (82 , 84) in Formschluß bringbar ist, wenn das Schutzschild (46) die Montagestellung einnimmt.

11. Schutzeinrichtung nach einem oder mehreren der vorherigen Ansprüche, dadurch gekennzeichnet, daß seitlich der Aussparung (116) der Klinke (48) eine kurze (115) und eine lange Nase (113) angeordnet sind, wobei die lange Nase (113) beim Aufliegen der Klinke (48) auf dem Lager (50) oberhalb von diesem zu liegen kommt.

**Claims**

1. A guard arrangement (22) in the fom of a guard shield (46) for covering a power take-off shaft (24), in particular of an agricultural tractor, which is displaceable from a guard position in which it covers the power take-off shaft (24) from at least one side into an installation position in which it permits access to the power take-off shaft (24), which can he brought into engagement with holding means (52, 98, 100) associated with the individual positions and which, for the purposes of displacement between the two positions, has at least mounting (50) guided in a guide (72), wherein the guide (72) or the mounting (50) is arranged on the guard shield (46) and the mounting (50) or the guide (72) is arranged at a stationary location characterised in that the guide (72) is extended in such a way that the guard shield (46) is displaceable into a further guard position and that a lock member (48) against which the mounting (50) can he brought to bear in a guard position is provided and so arranged that the mounting (50) can be moved selectively in the entire guide (72).

2. A guard arrangement according to claim 1 characterised in that the guide (72) is in the form of a slot having at least two portions (102, 104) which extend approximately perpendicularly to each other, wherein the first portion (102) is arranged horizontally or at a shallow angle to the horizontal in the one guard position and the second portion (104) is arranged as an upstanding limb in the further guard position.

3. A guard arrangement according to claim 2 characterised in that the mounting (50) can be brought to bear selectively against the lock member (48) in the transition from the one portion (102) to the other portion (104).

4. A guard arrangement according to one or more of the preceding claims characterised in that the lock member (48) can he pivoted into the region of movement of the mounting (50) and is pivotally connected to the guard shield (46) which has the guide (72).

5. A guard arrangement according to one or more of the preceding claims characterised in that the lock member (48) is a pivotable pawl.

6. A guard arrangement according to one or more of the preceding claims characterised in that the pawl (48) has a recess (116) which is adapted to the outside contour of the mounting (50).

7. A guard arrangement according to one or more of the preceding claims characterised in that joined to the second portion (104) is a third portion (106) which has a lateral recess in which the mounting (50) can he brought to bear.

8. A guard arrangement according to one or more of the preceding claims wherein the holding means (52, 98, 100) respectively comprise a stationary arresting pin (52) and at least two notches (98, 100) provided in the pivotable guard shield (46), the guide (72) and the mounting (50) therein are at a lateral spacing relative to the centre of gravity of the guard shield (46) carrying them, and the mounting (50) is freely rotatable in the guide (72), characterised in that the prolonged guide (72) is arranged in such a way that the notch (100) associated with the further guard position is disposed on a circular arc around the mounting (50) when the guard shield (46) occupies the further guard position and is longer than the notch (98) associated with the guard position.

9. A guard arrangement according to claim 8 having edges which are provided at the mouth openings of the notches (98, 100), characterised in that an edge which is towards the mounting (50) and which is provided at the mouth opening of the notch (98) associated with the guard position is further away from the mounting centre point than at least one of edges of the arresting pin (52), which are also towards the mounting (50), when the guard shield (46) occupies the guard position.

10. A guard arrangement according to one or more of the preceding claims characterised in that there is provided a holder (44) which can be brought into positively connecting relationship with at least one recess (82, 84) disposed in a top portion (70) of the guard shield (46) when the guard shield (46) occupies the installation position.

11. A guard arrangement according to one or more of the preceding claims characterised in that arranged laterally of the recess (116) in the pawl (48) are a short nose (115) and a long nose (113), wherein the long nose (113) comes to lie above the mounting when the pawl (48) bears against the mounting (50).

**Revendications**

1. Dispositif de protection (22) en forme d'écran protecteur (ou protecteur) (46) devant camoufler une prise de force (24), en particulier d'un tracteur agricole, pouvant passer d'une position de protection dans laquelle il camoufle la prise de force (24) au moins à côté, à une position de montage dans laquelle il permet d'accéder à la prise de force (24), peut être mis en prise avec les fixations (52, 98, 100) correspondant aux différentes positions et comporte, pour le déplacement entre les deux positions, au moins un appui (50) guidé dans un guide (72), le guide (72) ou l'appui (50) étant disposés sur le protecteur (46) et l'appui (50) ou le guide (72) en position fixe, caractérisé en ce que le guide (72) est prolongé de façon que le protecteur (46) puisse passer dans une autre position de protection, et en ce qu'un arrêt (48) avec lequel l'appui (50) peut être amené en contact dans une position de protection est prévu et conformé de façon que l'appui (50) puisse être déplacé à volonté dans l'ensemble du guide (72).

2. Dispositif de protection suivant la revendication 1, caractérisé en ce que le guide (72) est réalisé sous la forme d'une fente comportant au moins deux sections (102, 104) dirigées dans des directions mutuellement perpendiculaires, la première section (102) étant disposée horizontalement ou suivant un angle faible avec l'horizontale dans l'une des positions de protection et la seconde section (104) étant disposée en tant que branche supérieure dans l'autre position de protection.

3. Dispositif de protection suivant la revendication 2, caractérisé en ce que l'appui (50) peut être amené à volonté en contact avec l'arrêt (48) dans le passage de la première section (102) à l'autre section (104).

4. Dispositif de protection suivant une ou plusieurs des revendications précédentes, caractérisé en ce que l'arrêt (48) peut passer en pivotant dans la zone de déplacement de l'appui (50) et est articulé au protecteur (46) comportant le guide (72).

5. Dispositif de protection suivant une ou plusieurs des revendications précédentes, caractérisé en ce que l'arrêt (48) est un cliquet pivotant.

6. Dispositif de protection suivant une ou plusieurs des revendications précédentes, caractérisé en ce que le cliquet (48) présente un évidement (116) adapté au contour extérieur de l'appui (50).

7. Dispositif de protection suivant une ou plusieurs des revendications précédentes, caractérisé en ce qu'il se raccorde à la seconde section (104) une troisième section (106) qui comporte un évidement latéral dans lequel l'appui (50) peut être placé.

8. Dispositif de protection suivant une ou plusieurs des revendications précédentes, les fixations (52, 98, 100) comprenant chacune une broche de blocage fixe (52) et au moins deux encoches (98, 100) prévues dans le protecteur pivotant (46), le guide (72) et l'appui (50) qui y est reçu étant placés à distance latérale du centre de gravité du protecteur (46) qui les reçoit et l'appui (50) pouvant tourner librement dans le guide (72), caractérisé en ce que le guide prolongé (72) est disposé de façon que l'encoche (100) correspondant à l'autre position de protection est placée sur un arc de cercle centré sur l'appui (50), lorsque le protecteur (46) occupe l'autre position de protection, et est plus longue que l'encoche (98) correspondant à la position de protection.

9. Dispositif de protection suivant la revendication 8, comportant des arêtes formées aux embouchures des encoches (98, 100), caractérisé en ce qu'une arête située du côté de l'appui (50), formée à l'embouchure de l'encoche (98) correspondant à la position de protection, est plus éloignée du centre de l'appui qu'au moins l'une des arêtes de la broche de blocage (52) situées du côté de l'appui (50), lorsque le protecteur (46) prend la position de protection.

10. Dispositif de protection suivant une ou plusieurs des revendications précédentes, caractérisé en ce qu'il est prévu un organe de retenue (44) qui peut être accouplé par concordance de forme avec au moins un évidement (82, 84) situé dans une partie supérieure (70) du protecteur (46), lorsque le protecteur (46) occupe la position de montage.

11. Dispositif de protection suivant une ou plusieurs des revendications précédentes, caractérisé en ce qu'un ergot court (115) et un ergot long (113) sont disposés latéralement par rapport à l'évidement (116), l'ergot long (113) venant se placer, lorsque le cliquet (48) repose sur l'appui (50), au-dessus de celui-ci.

FIG. 1

FIG. 2

Pos. A

Pos. B

FIG. 3

Pos. C                    FIG. 4

Pos. D

FIG. 5